(19) Europäisches Patentamt
European Patent Office
Office européen des brevets

(11) **EP 2 944 089 B1**

(12) **EUROPEAN PATENT SPECIFICATION**

(45) Date of publication and mention
of the grant of the patent:
**07.03.2018 Bulletin 2018/10**

(21) Application number: **13700857.9**

(22) Date of filing: **11.01.2013**

(51) Int Cl.:
***H04N 21/24*** *(2011.01)* ***H04N 21/262*** *(2011.01)*
***H04N 21/845*** *(2011.01)*

(86) International application number:
**PCT/EP2013/050516**

(87) International publication number:
**WO 2014/108207 (17.07.2014 Gazette 2014/29)**

(54) **TECHNIQUE FOR OPERATING CLIENT AND SERVER DEVICES IN A BROADCAST COMMUNICATION NETWORK**

VERFAHREN ZUM BETRIEB VON CLIENT- UND SERVER-VORRICHTUNGEN IN EINEM RUNDFUNKKOMMUNIKATIONSNETZ

TECHNIQUE DE MISE EN OEUVRE DE DISPOSITIFS DE CLIENT ET DE SERVEUR DANS UN RÉSEAU DE COMMUNICATION DE DIFFUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.11.2015 Bulletin 2015/47**

(73) Proprietor: **Telefonaktiebolaget LM Ericsson (publ)**
**164 83 Stockholm (SE)**

(72) Inventors:
• **LOHMAR, Thorsten**
**52074 Aachen (DE)**
• **EL KHAYAT, Ibtissam**
**B-4690 Glons (BE)**

(74) Representative: **Ericsson**
**Patent Development**
**Torshamnsgatan 21-23**
**164 80 Stockholm (SE)**

(56) References cited:
**US-A1- 2004 186 877** **US-A1- 2008 086 751**
**US-A1- 2008 170 630**

• **RAGHUVEER A ET AL: "A Network-Aware Approach for Video and Metadata Streaming", IEEE TRANSACTIONS ON CIRCUITS AND SYSTEMS FOR VIDEO TECHNOLOGY, vol. 17, no. 8, 1 August 2007 (2007-08-01) , pages 1028-1040, XP011190414, IEEE SERVICE CENTER, PISCATAWAY, NJ, US ISSN: 1051-8215, DOI: 10.1109/TCSVT.2007.897462**
• **SEN S ET AL: "Online smoothing of variable-bit-rate streaming video", IEEE TRANSACTIONS ON MULTIMEDIA, vol. 2, no. 1, March 2000 (2000-03), pages 37-48, XP002711873, IEEE USA ISSN: 1520-9210, DOI: 10.1109/6046.825793**

## Description

## Technical Field

The present disclosure generally relates to operating client and server devices in a broadcast communication network. The client device is adapted to receive from the server device a stream of media segments as well as information indicating a predicted media segment availability.

## Background

Media streams transmitted from a server device to a client device are used in many communication applications. For example, it is now common to transmit video/audio streams from a server device to client devices, and to render the content of the transmitted video/audio streams on man-machine interfaces of the client devices. Thereby, users of the client devices are enabled to watch a movie or to join a video life conference.

In order to prevent the rendering mechanism of the client device from trying to render media segments of the media stream although they have not yet actually arrived at the client device, the server device and the client device have to synchronize the transmission and rendering of the media stream. In this way, it can also be prevented that media segments which have already arrived at the client device are buffered for an unnecessarily long period of time at the client device before being rendered on the man-machine interface of the client device.

In order to properly synchronize the transmission and rendering of the media stream, it has been proposed to provide media stream characteristic information to the client device (comprising, e.g., information on availability of media segments of the media stream at the server device, information on the data size of the media segments, etc). In conventional, approaches, the media stream characteristic information may indicate, for example, at which point of time a particular media segment of the media stream is made available at the server device for transmission to the client device. Based on this information, the client device may send a corresponding transmission request to the server device to trigger the transmission of the media segment. Since the client device always knows the exact point of time when a desired segment of the media stream is available at the server device for transmission, and since the client device can actively trigger the transmission of the media segment, media stream transmission and media stream rendering can be efficiently synchronized.

The above-described approach functions well assuming that the transmission of the media stream from the server device to the client device is done via a communication network of the unicast type. However, if the transmission of the media stream from the server device to the client device is done via a broadcast/multicast network, synchronization between the server device and the client device is more difficult since the client device may not be able to fully actively control (trigger) the transmission of the media segments from the server device to the client device.

For example, it may happen that a media segment sent out in time by the server device arrives at the client device later than expected due to a transmission delay within the communication network. Although the client device is informed about the point of time at which the media segment is sent out by the server device to the client device, the actual availability of the media segment at the client device is still difficult to predict. Thus, it may happen that the client device tries to render the media segment which should have arrived already, but actually has not.

Document "A Network-Aware Approach for Video and Metadata Streaming" from Aravindan Raghuveer and David. H. C. Du (IEEE TRANSACTIONS ON CIRCUITS AND SYSTEMS FOR VIDEO TECHNOLOGY, VOL. 17, NO. 8, AUGUST 2007) relates to quality of service (QoS) for Internet-based video streaming applications. A dynamic rate and quality adaptation algorithm is disclosed where the server varies its sending rate (without varying the quality level) to adapt to the network and client conditions.

US 2008/0170630 A1 discloses controllers, systems and methods that apply techniques for determining signal sequence characteristics that propagate through a sequence of buffers. One of the buffers represents buffering characteristics of a network through which the signal sequence propagates. The signal sequence may include packets of a media stream and the network may include a wireless network.

## Summary

It is desirable to improve synchronicity between a server device and a client device for a media stream transmitted from the server device to the client device using a broadcast communication network.

According to an aspect of the present disclosure, a method of operating a client device that is adapted to receive from a server device via a broadcast communication network at least one media stream comprising individual media segments is provided. The method comprises determining first availability information, the first availability information indicating a predicted availability of one or more media segments of a first media stream or a first part of the first media stream at the client device. The method further comprises determining, based on the first availability information and for at least one media segment of the first media stream or the first part of the first media stream received at the client device, a difference between the predicted availability and an actual availability at the client device. Then difference information reflecting the determined difference for the at least one media segment is transmitted to the server device.

In certain configurations the client device may compare a predicted availability of a media segment with an actual availability of the media segment at the client device. It may further report the result of this comparison process back to the server device. In this way, the client device may, for example, give feedback on the correctness of the first availability information to the server device. The server device may then react based on this feedback. The server device may, for example, modify the timing of sending out media segments which have not yet sent out so far, or modify availability information which is to be sent out to the client device and which indicates a predicted availability of one or more media segments of a future media stream (second media stream) or a part of the same media stream still to be sent to the client device in the future.

The first availability information may be received from the server device. Alternatively, the first availability information may be generated by the client device itself. The first availability information may explicitly specify one/several points of time of a predicted availability of one/several media segments at the client device. Alternatively, the first availability information may be information which does not (or only partly) explicitly specify one/several points of time of predicted availability of one/several media segments at the client device, but information from which explicit points of time of predicted availability of one/several media segments at the client device can be calculated by the client device itself (e.g., by decompression or in any other way). For example, the first availability information may include a predicted availability of a single media segment at the client device and a media segment duration being constant for all subsequent media segments. In this case, the predicted availabilities of the subsequent media segments at the client device can be calculated by the client device itself without any further information.

The method may further comprise receiving second availability information from the server device, which indicates a predicted availability of media segments of a second media stream or a second part of the first media stream at the client device and which reflects the transmitted difference information. The second part of the first media stream may generally be a part of the first media stream which (immediately or with a delay) follows the first part of the first media stream. The second part of the first media stream is sent out to the client device after the first part of the first media stream. Likewise, the second media stream is sent out to the client device after having sent out the first media stream to the client device. The time between the first part of the first media stream and the second part of the first media stream or the time between the first media stream and the second median stream depends on the type of application and can be arbitrarily chosen. For example, the time may be one second or less or a day or a week or even longer. The difference information fed back by the client device to the server device may influence the generation of the second availability information. As a result, differences of predicted availabilities and actual availabilities of media segments of a second media stream or a second part of the first media stream may generally be less than differences between predicted availabilities and actual availabilities of media segments of the first media stream or the first part of the first media stream. The second media stream may be an updated part of a previous (e.g., the first) media stream. Likewise, the second part of the first media stream may be a updated part of a previous (e.g., the first) part of the first media stream.

The client device may generate further difference information reflecting determined differences between predicted availabilities and actual availabilities of media segments of the second media stream or the second part of the first media stream and transmit this difference information to the server device. The server device may use this further difference information for generating third availability information indicating predicted availabilities of media segments of a third media stream or a third part of the first media stream which (immediately or with a delay) follows the second media stream or the second part of the first media stream at the client device, and so on.

The first part of a media stream (and, optionally, the second part of a media stream, the third part of a media stream, etc.) may respectively comprise only one media segment or, alternatively, a plurality of media segments. The lengths of the different parts of the media streams may differ from each other. Likewise, a first media stream, a second media stream, the third media stream, etc. may respectively comprise only one media segment or a plurality of media segments. The lengths of the different media streams may differ from each other.

The differences between predicted availabilities and actual availabilities of media segments as repeatedly determined may be collected at the client device or at the server device and processed as a whole. For example, an averaged difference value may be determined over all difference values received so far at the server device, and this average value may be used in order to generate the availability information for media segments to be transmitted in the future or to gather statistics. In case multiple client devices are attached to the server device, the averaging may be performed across the client devices.

One or more received media segments may be buffered in a buffer at the client device. In this way, it is, for example, possible to collect a particular number of segments of a media stream at the client device before all collected media segments are read out as a batch from the buffer to be rendered. For example, the client device may wait until all media segments necessary for forming a complete sequence of video frames have been received at the client device, and then render this video frame sequence by reading out the corresponding media segments from the buffer in one go.

The difference information may reflect at least one buffering period indicating how long a media segment completely received at the client device has been stored in the buffer until the received media segment has been read out of the buffer in order to be rendered. The buffering period may reflect the delay between the reception of the media segment at the client device and the rendering of the media segment. The buffering period may be used as an indicator which reflects the difference between the predicted availability and the actual availability of a media segment. If the buffering period is too long, the client device unnecessarily waits to render the media segment to the user of the client device. If the buffering period is too short, there may be the risk that in case of a slight fluctuation of transmission times of the media stream from the server device to the client device the client device reads out a media segment too early (since it has not yet been fully received).

The difference information may be transmitted from the client device to the server device using a reception reporting function of a Broadcast Multicast Service Center (BM-SC). The communication protocol used for transmitting the difference information may be the Transmission Control Protocol/Internet Protocol (TCP/IP). The client device may add location information specifying the location of the client device like cell identification information, satellite-based positioning information (e.g., from the Global Positioning System) or service area information to the difference information. Generally, arbitrary existing communication infrastructure may be used in order to send the difference information from the client device to the server device. UDP may, as an example, also be used.

The client device may determine differences between predicted and actual availabilities using an extended or already existing Quality of Experience (QoE) functionality running on the client device. An advantage of using an already existing QoE functionality is that no additional (e.g., hardware) resources are needed. The determined differences (QoE reports) may be collected using the reception reporting function of the BM-SC.

The difference information may be sent immediately after determining for one media segment that the actual availability is later than the predicted availability. In this way, a very fast feedback may be given from the client device to the server device. Alternatively or additionally, a plurality of differences between predicted availabilities and actual availabilities of media segments received at the client device (e.g., on a segment-by-segment or any other basis) are determined at the client device, wherein the difference information is derived at the client device from the plurality of determined differences. Thus, may the feedback may be more precise since it reflects more "history".

The difference information may include a difference minimum value which is the value of the smallest difference out of the plurality of determined differences. In this way, the "most critical" media segment is filtered out (i.e., the media segment endangered most to be rendered too early by the client device). Alternatively or additionally, the difference information may include a difference maximum value, which is the value of the largest difference out of the plurality of determined differences. In this way, the media segment is filtered out which has been buffered longest in the buffer before being rendered to the user of the client device. The server device thus gets an idea about the range of availability of media segments at the client device. Alternatively or additionally, the difference information may include an average value of a plurality of difference values.

The client device may comprise a media player configured to read each media segment in accordance with its predicted availability. As an example, the media player may try to read out a media segment from the buffer in accordance with its predicted availability. Should the predicted availability not be correct, it may happen that the media play tries to read a media segment from the buffer although it has not yet been stored in the buffer. In other cases, it may happen that the media segment is read out of the buffer very late, meaning that the media segment is stored within the buffer for an unnecessary long period of time.

According to a further aspect, a method of operating a server device to transmit via a broadcast communication network to a client device at least one media stream comprising individual media segments is presented. The method comprises transmitting first availability information to the client device, the first availability information indicating a predicted availability of one or more media segments of a first media stream or a first part of a first media stream at the client device which are transferred to the client device in the future. The method further comprises receiving difference information from the client device reflecting, for at least one media segment of the first media stream or the first part of the first media stream received at the client device, a difference between the predicted availability based on the first availability information and an actual availability at the client device. Based on the received difference information, second availability information is generated indicating a predicted availability of one or more media segments of a second media stream or a second part of the first media stream at the client device which are transferred to the client device in the future. The second availability information is transmitted to the client device.

The term "server device" may denote, but is not restricted to a single hardware device. Rather "server device" may also mean a (logical) group of hardware devices which are connected to each other and which may be locally spaced apart from each other (e.g., located in different cities). For example, a hardware device sending out the availability information may be different from the hardware device receiving the difference information from the client device.

The server device may generally generate the second availability information in dependence on feedback (i.e., control information such as the difference information) given from the client device with regard to the first availability information. The server device may for example adapt the predicted availability of the second availability information in response to the feedback on the predicted availability included in the first availability information. In this way, it is possible for the server device to optimize the preciseness of the predicted availabilities of the media segments included in the availability information sent to the client device. Thereby the client device is enabled to render the content of the media stream neither too soon nor too late, although the client device does not actively control individual transmission times of the media segments.

The server device may adapt, based on the received difference information, a time offset reflected in the predicted availability of one or more media segments of the second media stream or the second part of the first media stream. The time offset may indicate in an exemplary live encoding scenario an estimated difference between the end of the encoding operation for a media segment at the server device and a reception time of the media segment at the client device. That is, the offset may reflect a time period which cannot be fully calculated by the server device and which has therefore to be estimated first (and afterwards to be corrected based on the feedback of the client device).

The at least one media stream may be an arbitrary media stream. For example, the at least one media stream may be an adaptive media stream. The media stream may, for example, be an adaptive Hypertext Transfer Protocol (HTTP) media stream. However, also other types of adaptive media streams are possible.

The at least one media stream may be a Moving Picture Expert Group Dynamic Adaptive Streaming over HTTP (MPEG DASH) media stream. The broadcast communication network may generally use a file delivery communication protocol, for example the File Delivery Over Unidirectional Transport (FLUTE) communication protocol, to deliver at least one of the media segments, and optionally the first and second availability information, from the server device to the client device.

Generally, the media segments may be delivered as individual files via the broadcast communication network. Each of the media segments may be delivered via an individual communication route from the server device to the client device. A plurality of the media segments may also be transmitted together as one file.

The first availability information (and the second availability information, etc.) may be included in a Media Presentation Description (MPD) file. In this context, transmitting first availability information from the server device to the client device means transmitting a first MPD file from the server device to the client device, and transmitting second availability information from the server device to the client device means transmitting a second MPD file from the server device to the client device. The MPD files may be transmitted from the server device to the client device via the broadcast communication network or via an arbitrary different communication network.

"Predicted availability" of a media segment may in the context of the present disclosure in particular mean a prediction indicative of when the media segment will be (e.g., fully) available on the client device (e.g., for consumption of the media segment by a media player or for rendering of the media segment to the user of the client device) or for download by the client device. Further, "actual availability" of a media segment may be indicative of when the media segment has actually become (e.g., fully) available. As an example, it may be indicative of when a delivery protocol used to deliver the media segment to the client device has fully received the media segment on the client device (e.g., such that it can be consumed by a media player or rendered to the user of the client device).

In the case that FLUTE is used as communication protocol to deliver the media segments from the server device to the client device, the actual availability of a media segment may be determined using a file recovery complete indicator of a FLUTE file recovery mechanism. The file recovery complete indicator may be set based on a result of a monitoring process which monitors a folder or directory on the client device where files respectively comprising at least one media segment which are completely received from the server device are stored. The file recovery complete indicator may for example be a flag which is set (to, e.g., "1") for a particular file once the file (comprising at least one media segment) has been received completely and has been successfully stored in the folder.

According to another aspect, a computer program product is provided comprising program code portions for performing the steps of any one of the method aspects disclosed herein when the computer program product is executed on one or more computing devices. The computer program product may be stored on a computer-readable recording medium or may be provided for download via a communication network.

According to a still further aspect, a client device is provided which is adapted to receive via a broadcast communication network from a server device at least one media stream comprising individual media segments. The client device comprises a determining unit adapted to determine first availability information, the first availability information indicating a predicted availability of one or more media segments of a first media stream or a first part of a first media stream at the client device. The client device further comprises a processing unit connected to the receiving unit and adapted to determine, based on the received first availability information and for at least one media segment of the first media stream or the first part of the first media stream received at the client device, a difference between the predicted availability and an actual availability at the client device, and to generate difference information reflecting the determined difference to the server device. Also, the client device comprises a transmitting unit connected to the processing unit and adapted to transmit the difference information to the server device.

According to a still further aspect, a server device is provided which is adapted to transmit via a broadcast communication network to a client device at least one media stream comprising individual media segments. The server device comprises a transmitting unit adapted to transmit first availability information to the client device, the first availability information indicating a predicted availability of one or more media segments of a first media stream or a first part of the first media stream at the client device which are transferred to the client device in the future. Further, the server device comprises a receiving unit adapted to receive difference information from the client device which reflects, for at least one media segment of the first media stream of the first part of the first media stream received at the client device, a difference between the predicted availability based on the first availability information and an actual availability at the client device. Also, a generating unit connected to the transmitting unit and the receiving unit is provided which is adapted to generate, based on the received difference information, second availability information which indicates a predicted availability of media segments of a second media stream or a second part of the first media stream at the client device which are transferred to the client device in the future. The transmitting unit is further adapted to transmit the second availability information to the client device.

As already mentioned, the term "server device" may be a physical entity or, alternatively, a logical entity that can comprise multiple communication nodes connected with each other. In this case, the MPD file may be generated at one device of the logical entity, and the feedback provided by the client device may be received by a different device of the logical entity.

**Brief Description of the Drawings**

In the following, the present disclosure will be described in more detail with reference to exemplary embodiments illustrated in the drawings, wherein

Fig. 1    shows a schematic drawing of a client device according to an embodiment;

Fig. 2    shows a schematic drawing of a server device according to an embodiment;

Fig. 3    shows a schematic flowchart of a method of operating a client device according to an embodiment;

Fig. 4    shows a schematic flowchart illustrating a method of operating a server device according to an embodiment;

Fig. 5    shows a schematic drawing of a system including a server device and a client device according to an embodiment;

Fig. 6    shows a schematic drawing of a system including a server device and a client device according to another embodiment;

Fig. 7    shows a schematic drawing illustrating differences between predicted availabilities and actual availabilities occurring when operating the client device/server device according to an embodiment;

Fig. 8    shows a schematic drawing illustrating a streaming principle of DASH usable when operating a client device or server device using a unicast communication link;

Fig. 9    shows a schematic drawing of a MPD file usable when operating a client device or server device according to an embodiment;

Fig. 10   schematically shows the working principle of the FLUTE communication protocol usable for operating a client device or server device according to an embodiment; and

Fig. 11   shows a schematic drawing illustrating differences in media segment availability management in unicast communication networks and broadcast communication networks.

**Detailed Description**

In the following description, for purposes of explanation and not limitation, specific details are set forth, such as specific device and system configurations and specific methods, steps and functions, in order to provide a thorough understanding of the technique presented herein. It will be appreciated that this technique may be practiced in other embodiments that depart from these specific details. As an example, while several embodiments will be described in connection with the DASH and FLUTE protocols, it will be appreciated that the present disclosure can also be practiced in connection with other protocols.

Those skilled in the art will further appreciate that the methods, steps and functions described herein may be implemented using individual hardware circuitry, using software functioning in conjunction with a program microprocessor or general purpose computer, using one or more Application Specific Integrated Circuits (ASICs), one or more Digital Signal Processors (DSPs) and/or one or more Field Programmable Gate Arrays (FPGAs). It will also be appreciated that the technique disclosed herein may be embodied in a processor and a memory coupled to the processor, wherein the memory stores one or more programs that perform the methods, steps and functions described herein when executed by the processor.

With respect to the following embodiments, the same reference numerals are used to denote the same or similar components.

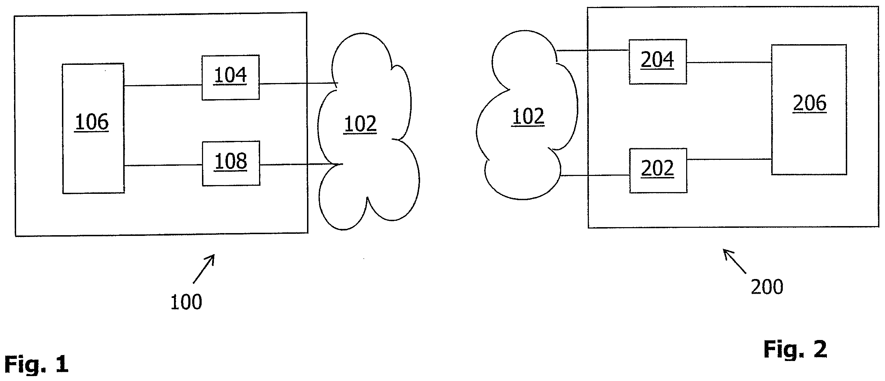

Fig. 1 shows an embodiment of a client device 100 adapted to receive a media stream via a communication network 102 from a server device (not shown in Fig. 1). The communication network 102 comprises a broadcast or multicast communication network for transmitting the media stream and a unicast communication network for transmitting difference information from the client device 100 to the server device. Availability information may be transmitted via any of these network types.

The client device 100 comprises a receiving unit 104 connected to the communication network 102 and adapted to receive first availability information from the server device via the communication network 102, the first availability information indicating a predicted availability of one or more media segments of a first media stream or a first part of the first media stream at the client device 100. The client device 100 further comprises a processing unit 106 connected to the receiving unit 104 and adapted to determine, based on the received first availability information and for at least one media segment of the first media stream or the first part of the first media stream received at the client device 100, a difference between the predicted availability and an actual availability at the client device 100, and to generate difference information reflecting the determined difference. Also, the client device 100 comprises a transmission unit 108 connected to the processing unit 106 and the communication network 102 and adapted to transmit the difference information to the server device 200 via the communication network 102.

Fig. 2 shows an embodiment of a server device 200. The server device 200 is configured to transmit a media stream and associated availability information to the client device 100. The media stream and the availability information do not have to be always be transmitted from the same server device 200 to the client device 100, i.e., different (e.g., spaced apart) units of a logical server device 200 may be used. For example, the client device 100 may move after having received the availability information, and due to its mobility the client device 100 may be connected via the communication network 102 to a different unit of the logical server device 200.

The server device 200 comprises a transmitting unit 202 connected to the communication network 102 and adapted to transmit first availability information to the client device 100 of Fig. 1 via the communication network 102. The first availability information indicates a predicted availability of one or more media segments of a first media stream or a first part of the first media stream at the client device which are transferred to the client device in the future. The server device 200 further comprises a receiving unit 204 connected to the communication network 102 and adapted to receive difference information via the connected to the communication network 102 from the client device 100 which reflects, for at least one media segment of the first media stream or the first part of the first media stream received at the client device, a difference between the predicted availability based on the first availability information and an actual availability at the client device 100. Further, the server device 200 comprises a generating unit 206 connected to the transmitting unit 202 and the receiving unit 204 and adapted to generate, based on the received difference information, second availability information which indicates a predicted availability of media segments of a second media stream or a second part of the first media stream at the client device which are transferred to the client device 100 in the future. The transmitting unit 202 is further adapted to transmit the second availability information to the client device 100 via the communication network 102.

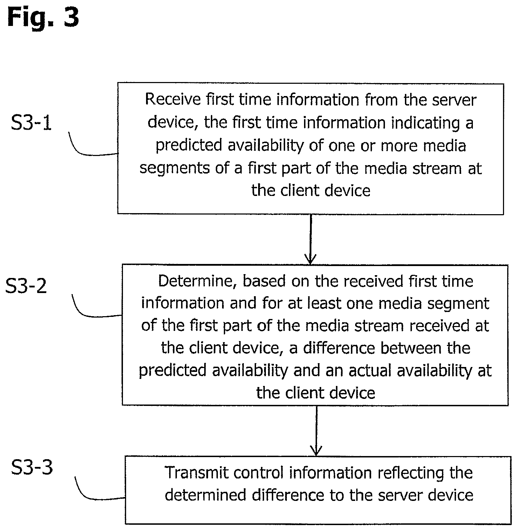

Fig. 3 shows a method embodiment of operating the client device 100. At step S3-1, first availability information is received e.g. from the server device 200 via the communication network 102 by the receiving unit 104, the first availability information indicating a predicted availability of one or more media segments of a first media stream or a first part of the first media stream at the client device 100. The first availability information may also be generated by the client device 100 itself, based on an input from the server device 200 and a time of reception of a (e.g., first) media segment of the first media stream or of a first part of the first media stream. At step S3-1, it is determined by the processing unit 106, based on the received first availability information and for at least one media segment of the first part of the media stream received at the client device 100, how large the difference between the predicted availability and an actual availability at the client device 100 is. At step S3-3, difference information reflecting the determined difference is transmitted by the transmission unit 108 to the server device 200 via the communication network 102.

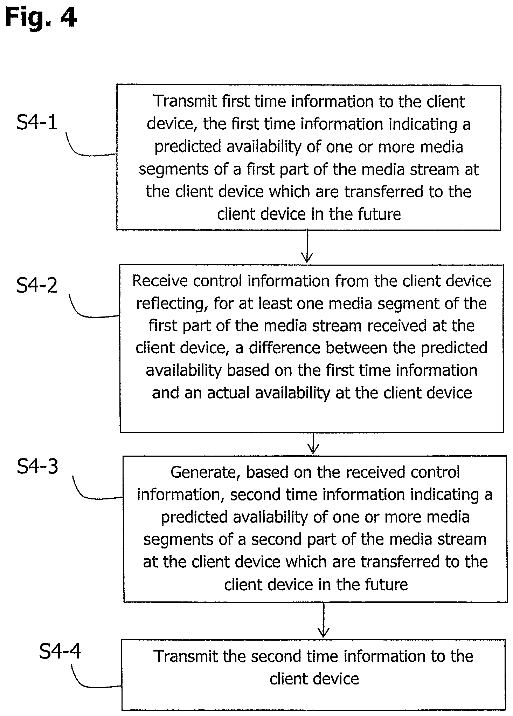

Fig. 4 shows a method embodiment of operating the server device 200. At step S4-1, the transmission unit 202 transmits first availability information to the client device 100 via the communication network 102, the first availability information indicating a predicted availability of one or more media segments of a first media stream or a first part of the first media stream at the client device 100 which are transferred to the client device 100 in the future. At step S4-2, the receiving unit 204 receives difference information from the client device 100 via the communication network 102 which reflects, for at least one media segment of the first media stream or the first part of the first media stream at the client device 100, a difference between the predicted availability based on the first availability information and an actual availability at the client device. At step S4-3, the generating unit 206 generates, based on the difference information received via the receiving unit 204, second availability information indicating a predicted availability of one or more media segments of a second media stream or a second part of the first media stream at the client device 100 which are transferred to the client device 100 in the future. At step S4-4, the transmitting unit 202 transmits the second availability information to the client device 100 via the communication network 102. It has to be noted that processes S4-1 and S4-2 may be at least partly omitted in case that the client device 100 is connected to the server device 200 after the first availability information has already been sent out by the server device 200 (too late to receive the first availability information), or in case that the client device 100 is able to create at least a part of the first availability information itself. This generation may be based on information indicating a (constant) length of the media segments in combination with the reception of a first media segment (i.e., the knowledge of the reception time of the first media segment) of the first media stream or of a first part of the first media stream.

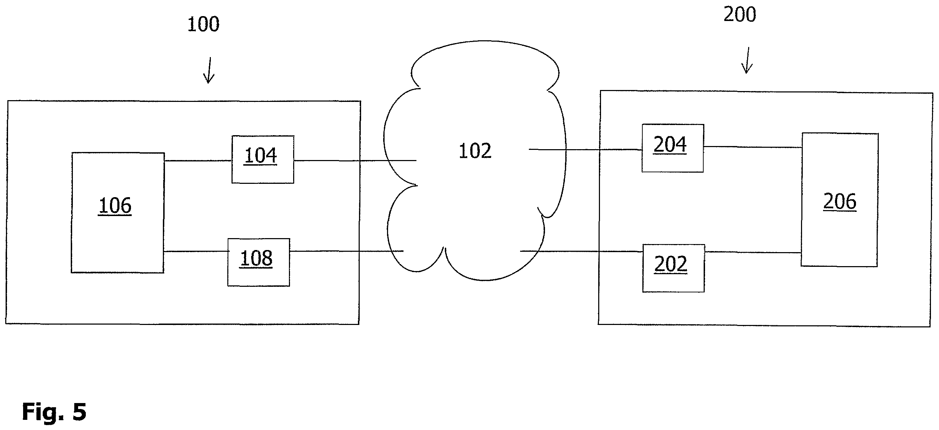

Fig. 5 shows an embodiment of a client-server system 500 which comprises the client device 100 and the server device 200 connected via the communication network 102 as shown in Figs. 1 and 2. It will be appreciated that in certain configurations multiple client devices 100 may be connected at the same time to the server device 200 and may at the same time receive one and the same media stream (in the same representation) via a broadcast transmission. Each client device 100 may further have a dedicated unicast connection to the server device 200 for transmitting feedback in the form of difference information to the server device 200.

The client server system 500 can be operated as follows. Initially, the generating unit 206 generates the first availability information and sends it via the transmitting unit 202 and the communication network 102 to the receiving unit 104 of the client device 100 (e.g., in a unicast, multicast or broadcast mode). After the first availability information, or together with the first availability information, the first media stream or the first part of the first media stream to which the first availability information refers is sent via the transmitting unit 202 and the communication network 102 in a broadcast or multicast mode to the receiving unit 104 of the client device 100.

The processing unit 106 of the client device 100 processes the received first availability information and determines, based on the received first availability information and for at least one media segment of the first media stream or the first part of the first media stream also received at the client device 100, a difference between the predicted availability and the actual availability at the client device 100. This difference is transmitted as difference information from the processing unit 106 via the transmitting unit 108 and the communication network 102 in a unicast mode to the receiving unit 204 of the server device 200.

The generating unit 206 of the server device 200 then generates, based on the received difference information, the second availability information and sends it via the transmitting unit 202 and the communication network 102 to the receiving unit 104 of the client device 100. After having received the second availability information, the second media stream or the second part of the first media stream to which the second availability information refers is sent via the transmitting unit 202 and the communication network 102 to the receiving unit 104 of the client device 100. This iterative process may be repeated as long as the difference between the predicted availability and the actual availability determined in the processing unit 106 at the client device 100 falls below and/or rises above a predetermined threshold value. Alternatively, this process may be repeated without limitation.

Depending on the application, the MPD files may be transmitted to the client device 100 immediately before transmitting the corresponding media stream or part of the media stream, or (well) in advance of transmitting the corresponding media stream or part of the media stream. For example, the availability information for a media segment may not be adjusted at the server device 200 during a running broadcast (media stream), but a vector (or average) of differences between predicted segment availabilities and actual segment receptions at the client device 100 may be uploaded to the server device 200 during a broadcast/multicast reception session or after (immediately or delayed) the client device 100 stops receiving media segments from the server device 200.

In the following, information on adaptive streaming techniques that may be implemented in connection with the present disclosure in general and, in particular, the embodiments illustrated in the drawings is given.

The present disclosure may be implemented in connection with adaptive streaming, such as adaptive HTTP streaming. Adaptive HTTP streaming supports video on demand as well as live video. Adaptive HTTP streaming is a transport technique which may use existing file formats such as ISO BMFF or MPEG2-TS. Different audio and video codecs are supported such as H.264, MPEG4, AAC and MP3 codecs. Also, Apple HTTP Live Streaming (HLS), Microsoft SmoothStreaming (ISM), 3GPP-DASH, MPEG-DASH, OITV HAS, Adobe Dynamic Streaming, etc. may be used as presentation format for adaptive HTTP streaming. For example, DASH may use MPEG2-TS or ISO-BMFF as presentation format. Apple HLS may use MPEG2-TS, SmoothStreaming (ISM) may use ISO-BMFF as presentation format.

Adaptive HTTP streaming techniques generally rely on the client device 100 to select the media quality. However, in the case of broadcast/multicast (i.e., in the case of using a broadcast communication network), typically only a single quality is provided by the server device, i.e., the client device 100 cannot chose between different qualities/representations of the media stream. The server device 200 (or content provider) describes all available representations (e.g., representations which are different in quality, different with regard to their media bitrates, etc.) and corresponding URLs to access these representations from the server device 200 in a manifest file. The manifest file is sent at least once at the beginning of a streaming session from the server device 200 to the client device 100 and may be updated once or several times during the streaming session. In case of Apple HLS, for example, the manifest is formatted as a playlist file in m3u8 format. In case of 3GPP/MPEG DASH, the manifest is an XML structure called MPD (Media Presentation Description).

Most of the conventional unicast adaptive HTTP streaming techniques require a client device to continuously fetch media segments from a server device, i.e., require the client device to continuously and actively trigger a download process of the media segments. Each media segment consumes a certain amount of media time (e.g., 10 sec per media segment) when consumed by a media player on the client device. The URLs for downloading the segments of different representations are described in the manifest file.

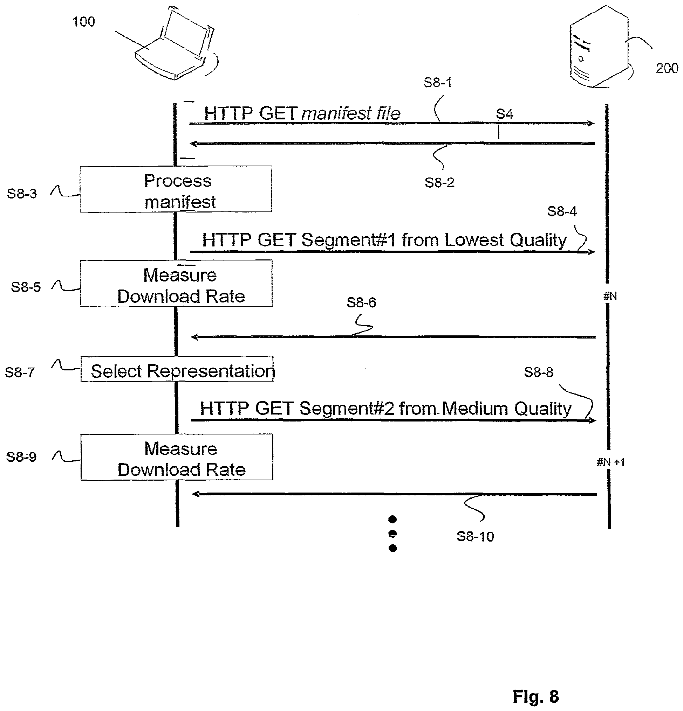

This conventional unicast adaptive HTTP unicast principle is described in Fig. 8. For a better understanding of the embodiments that follow. At step S8-1, the client device requests a manifest file of a media stream from the server device, which is delivered at step S8-2. At step S8-3, the client device processes the manifest file and chooses one of several representations offered in the manifest file. At step S8-4, the client device requests one or more first media segments from the server device in the selected representation, for example in the lowest quality, and accordance with the availability information described in the manifest file. At step S8-5, the client device starts to measure the download time of the first media segment, and the first media segment is transmitted from the server device to the client device at step S8-6. Based on the measured download time, the client device selects the representation of the second media segment at step S8-7 and sends a corresponding download request to the server device at step S8-8. At step S8-9, it is started to measure the download time of the second media segment, and the second media segment is transmitted from the server device to the client device at step S8-10. That is, in the unicast adaptive HTTP streaming process as shown in Figure 8, the client device continuously measures the communication link bitrate while receiving the media segments, and continuously requests for new media segments with eventually varying parameters like varying media bitrates. The client may change to another representation at any time. When using MPEG-DASH, it is even allowed for clients to efficiently switch between representations in the middle of a media segment.

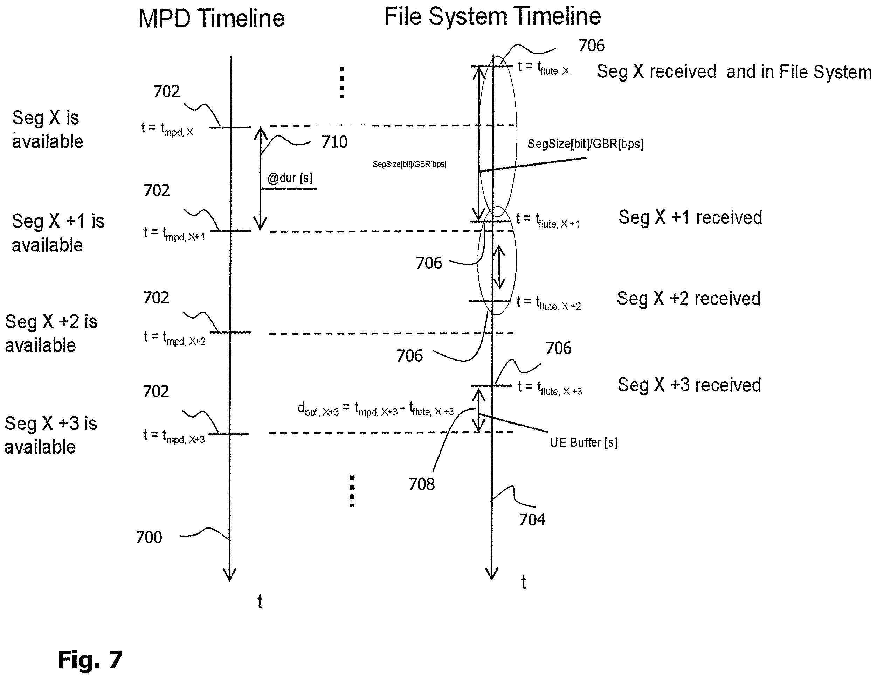

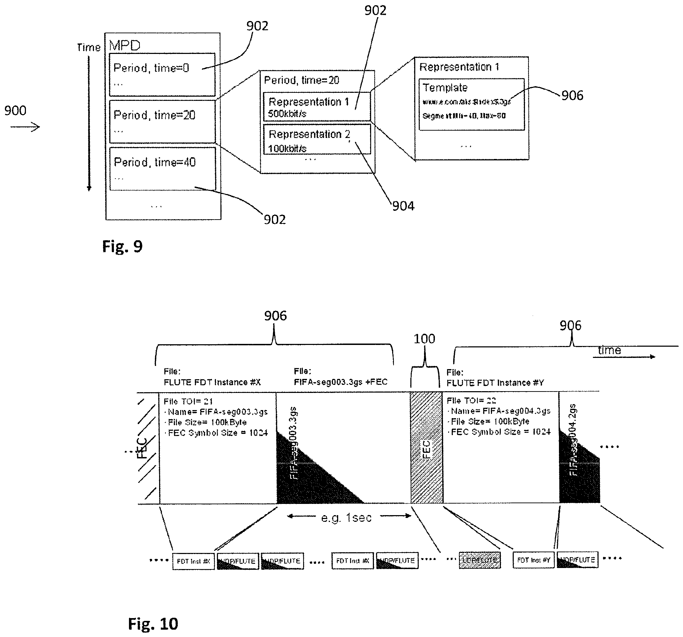

In embodiments of the present invention, e.g. when using DASH over broadcast, the mechanism shown in Figure 8 are not used, i.e., the client device 100 does not decide when to transmit media segments from the server device 200 to the client device 100. Instead, the transmission times (MPD file entries) of the media segments are the same for all client devices which belong to the same multicast group. That is, as shown in Fig. 10, the server device 200 may send a sequence of files respectively comprising media segments without any outside trigger. That is, the client device 100 does not need to request the media segments. Instead, the server device 200 provides a "predicted segment availability" indicating when the DASH player can safely assume that the files are received. Fig. 7 shows the difference between predicted segment availability and actual reception via broadcast.

"Broadcast" in the context of the present invention does not mean that each client device 100 of the broadcast group selects its own representation individually, but that the representation for all client devices 100 of the broadcast group is the same, i.e., only a single representation is provided via broadcast. Thus all client devices 100 use the same representation. That is, "broadcast" generally means that the same data (typically in the same, single quality representation) is provided to a plurality of subscribers.

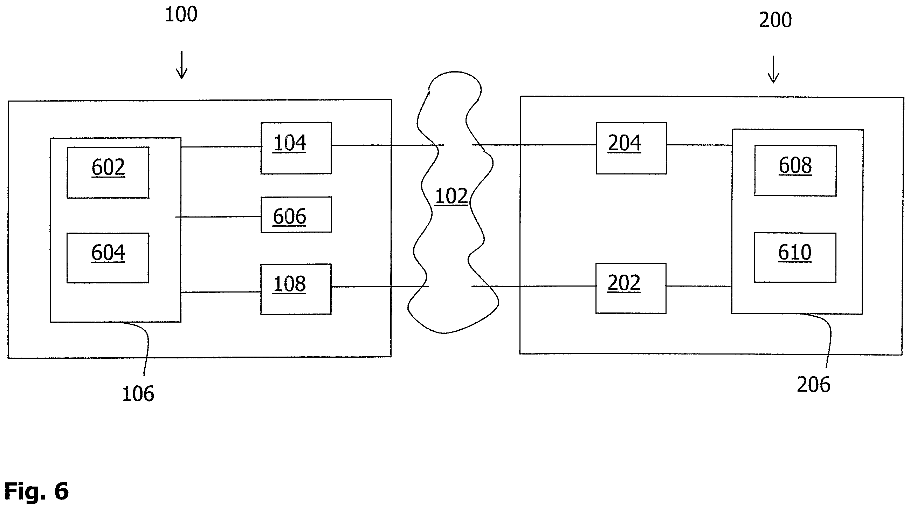

Fig. 6 shows more details of a possible realization of the client-server system of Fig. 5 and illustrates the use of several exemplary protocols, such as DASH.

The client server system 600 comprises the client device 100 and the server device 200 discussed above, wherein the receiving unit 104 of the client device 100 is coupled via a broadcast communication link of the communication network 102 to the transmitting unit 202 of the server device 200. The transmitting unit 108 of the client device 100 is connected via a unicast communication link of the communication network 102 to the receiving unit 204 of the server device 200.

The processing unit 106 of the client device 100 includes a DASH player subunit 602 and a QoE subunit 604. Further, the client device 100 comprises a memory unit 606 which is connected to the processing unit 106. The memory unit 606 may be configured as a buffer. The generating unit 206 of the server device 200 is connected to the receiving unit 204 and the transmitting unit 108 and includes a DASH media stream generating subunit 608 (e.g., configured as a segmenter or encoder) and an MPD generating subunit 610.

As already indicated above, it is assumed in this embodiment that the media stream is a DASH-compliant media stream, and that the first availability information and the second availability information are derived from the respective MPD files. Further, it is assumed that the protocol used to deliver the DASH media stream from the transmitting unit 202 of the server device 200 via the broadcast communication link of the communication network 102 to the receiving unit 104 of the client device 100 is FLUTE (or a similar file based delivery protocol). It is also assumed that the delivery protocol for transmitting difference information from the transmitting unit 108 of the client device 100 via the unicast communication link of the communication network 102 to the receiving unit 204 of the server device 200 is TCP/IP.

In the following, the interaction between the client device 100 and the server device 200 according to the embodiment of Fig. 6 will be explained in more detail.

First, the client device 100 receives from the server device 200 an MPD file either in response to a corresponding request via the unicast communication link or by receiving it via a broadcast service announcement channel. In response thereto, the server device 200 provides the MPD file via the broadcast or unicast communication link to the client device 100. The processing unit 106 processes the MPD file. Only a single representation for audio streams and video streams is provided in case of broadcast. The media segments (e.g., FLUTE files) of the media stream received at the client device 100 are buffered in the memory unit 606.

The DASH player subunit 602 then reads out the media segments from the memory unit 606 in accordance with the timing indicated in the MPD file. The DASH player subunit 602 may be adapted to not read out already received media segments from the memory unit 606 if the media segments are stored in the memory unit 606 earlier than indicated in the timing of the MPD file. On the other hand, the DASH player subunit 602 may be adapted to not to start rendering a media segment which has only been partially received by the client device 100, i.e., which has not yet been fully stored in the memory unit 606 (even if, according to the MPD timing, the media segment should already be available in the memory unit 606). In this way, the transmitted DASH media stream is rendered to the user of the client device 100 in a continuous manner to guarantee a satisfactory user experience.

The client device 100 may receive MPD updates during the rendering process from the server device. The client device 100 derives information about the media segments of the DASH media stream from the MPD updates which follow the already received media segments, and the above-described process is repeated. A media segment consists typically out of several IP packets (and is not comparable to TCP segments). The timing in the MPD file may, for example, take the form of a list of segment availability entries, each of the availability entries being assigned to one of the media segments, wherein each availability entry indicates the predicted availability of the corresponding media segment at the client device 100. Media segment availability may be described in form of a template, where the segments are numbered, beginning from a start number, on-wards.

When receiving the media segments at the client device 100, the QoE subunit 604 monitors when the FLUTE delivery protocol has fully received a particular media segment (i.e., monitors when the media segment has been completely stored in a file system of the memory unit 606). The QoE submit 604 also determines the predicted availability (i.e., which predicted point of time) assigned to the media segment according to the corresponding availability entry in the MPD file. In order to uniquely identify the media segment received at the client device 100, the QoE subunit 604 may compare an URL entry in the MPD file which is assigned to the media segment with URL data included in the media segment.

As soon as the media segment has been completely stored in the memory unit 606, the QoE subunit 604 determines a difference between the predicted availability of the media segment according to the MPD file and the actual availability of the media segment (which corresponds to the actual point of time at which the media segment has been fully received at the client device 100 and stored in the memory unit 606). The determined difference may be immediately reported back to the server device 200 as difference information via the unicast communication link. Alternatively, the QoE subunit 604 may wait until at least one succeeding media segment is completely received at the client device 100 and stored in the memory unit 606, and then again the difference between the predicted availability of this at least one succeeding media segment according to the MPD file and the actual availability (full storage of the at least one media segment in the memory unit 606) may be determined. Alternatively, the QoE subunit may determine the difference between predicted segment availability and actual segment availability for a sequence of media segments (e.g., 30 min) and then report the result as vector or average. Alternatively, the QoE subunit may determine the differences until the client device 100 decides to terminate the reception of media segments, and then the result may be uploaded (i.e. reported to the sever device 200) as a whole as vector or average, for example.

In this way, the QoE subunit 604 may collect a plurality of determined differences, transmit all determined differences to the server device 200, or transmit only information derived from the plurality of differences to the server device 200 (like one or more of an average, a minimum and a maximum of the collected differences).

Fig. 7 shows a schematic drawing illustrating differences between predicted availabilities and actual availabilities occurring when operating the client and server devices 100, 200 presented herein. Specifically, Fig. 7 illustrates predicted availabilities of media segments according to an MPD timeline 700 and corresponding actual availabilities on a FLUTE communication protocol layer level (file system timeline 704).

The DASH protocol assumes that each media segment contains data which consumes the same media time when being played out with the DASH player. For example, each media segment may consume 10 sec of media time when played with the DASH player. Live encoders typically work based on a client device buffer occupancy model, thereby enabling variable media stream bitrates. For example, video images of a video media stream may be encoded by the DASH encoder at the server device 200 into different amounts of bits in dependence on the bitrate chosen by the client device (e.g., I-frames are encoded into a higher number of bits, while B-frames are encoded into a lower number of bits). The consequence of the client buffering model is that the sizes of different media segments may not be the same. Instead, some segments may be larger than others, as shown on the right-hand side of Fig. 7.

In Fig. 7, the MPD timeline 700 reflects the assumption that the same transmission time is needed for each media segment in order to be transmitted from the server device 200 to the client device 100. That is, the differences 710 between predicted availabilities 702 (points of time) of succeeding media segments according to the MPD timeline 700 are constant. However, as indicated by the file system timeline 704 indicating the actual availability of the media segments in the file system of the client device 100, the actual availabilities 706 (points of time) of succeeding media segments at the client device vary. Thus synchronicity between the MPD timeline 700 and the file system timeline 704 may get lost.

For example, transmission times needed for the media segments in order to be transmitted from the server device 200 to the client device 100 may vary from each other due to the different sizes of the media segments, air interface conditions or network congestion. The actual availability of media segment X+3 at the client device 100 is before the predicted availability of media segment X+3; thus, a buffering period 708, dbufX+3, results, since the DASH player reads out the media segment X+3 not before the predicted availability.

On the other hand, to optimize radio and network resources, only the expected average bitrate of the media segments is typically allocated for transmission of the media segments of the media stream from the server device 200 to the client device 100. The duration for transmitting a media segment is defined by dividing its segment size by the corresponding reception bitrate (e.g., the Guaranteed Bit Rate, GBR, in case of MBMS). On the average, a media segment requires its media duration (i.e. media time in the media segment, e.g. number of video frames multiplied by the frame rate) to be transported. However, since the segments are of different size, the transfer duration is longer than the segment duration for larger packets.

The buffering duration of a media segment N in the buffer 606 at the client device 100 is defined by

$$d_{buf,N} = t_{mpd,N} - t_{flute,N}$$

wherein $t_{mpd,N}$ is the predicted availability (point of time) of the media segment according to the MPD timeline 700, and $t_{flute,N}$ is the actual availability (point of time) of the media segment as determined on a FLUTE layer level.

Then, the QoE subunit 604 of the client device 100 may for example determine the smallest buffering duration

$$\min\{d_{buf,N}\}, \forall N > 1$$

The smallest buffering duration is ideally equal to zero. If min{$d_{buff,N}$} is smaller than 0, then the DASH player submit 608 of the client device 100 suffered a "buffer underrun" (i.e., the media segment had not been completely received at the client device 100 when it was supposed to be received according to the MPD timeline 700).

The QoE subunit 604 then compiles a report (i.e., generates difference information) and uploads the report to a BM-SC reception reporting function according to the reception reporting instructions ("BM-SC" is the name of the node according to 3GPP TS 26.346). Reception Reports may belong to "associated Delivery Functions". Client devices 100 may be instructed to measure and upload QoE reports through an SDP file. The upload location may be defined through the Associated Procedure Description File), e.g., sends the difference information to the server device 200 with BM-SC capabilities. The difference information may comprise one or more values like the smallest buffering duration or a minimum duration/a maximum duration per time interval (e.g., the time interval needed to transmit a predetermined amount of media segments to the client device), a list of buffering durations, etc. In case of a "buffer underrun", difference information may immediately be generated and immediately be sent to the server device 200.

The QoE subunit 604 as described above allows the precise tuning of the predicted availability of a media segment at the client device 100. The availability may be predicted by the server device 200 based on the segment availability time of segments on the BM-SC (server device 200) from a Live Encoder (time when the media segment is sent out by the server device 200) and an transmission delay offset (estimated time needed for sending the media segment from the server device to the client device 100) when running "DASH over Broadcast". In this way, the "conventional" media segment availability (availability of the media segment at the server device 200 for download via a unicast link) is transformed into a predicted availability (when the media segment should have been completely received via broadcast at the client device 100) to be signaled via MPD to the client device 100.

In embodiments of the present invention, the term "media segment" may mean a concatenation of two or more IP (Internet Protocol) data packets.

The tuning could be done offline to detect a too large configured transmission delay offset and can additionally or as an alternative be used online to correct short offset and avoid bad QoE. "Offline" means in this context that the measured difference is considered only during a second, different media stream. "Online" means in this context that a closed adaptation loop applies, and that the measured differences are considered during a second part of the same media stream.

The transmission delay (time needed for transmission) of a DASH media segment over a Long Term Evolution (LTE) broadcast network may be constant. However, when using a live encoder 602 at the server side in order to generate the media stream, the problem arises that the live encoder 602 encodes the media segments according to a client device buffer occupancy model (e.g., in accordance with a bitrate chosen by the client device 100, that may vary). Thus, media segments with varying segment sizes are encoded by the live encoder 608. This leads to varying transmission times/rates of the media segments from the server device 200 to the client device 100.

Media segments can be broadcasted (using, e.g., LTE broadcast) to multiple client devices 100 in a broadcast cell. An advantage of the above embodiments is that, if non-tested low performing client devices 100 experience a buffer underrun when the offset has been optimized based on well performing client devices 100, the QoE reporting enables getting the offset optimized again for the non-tested low performing client devices 100 using the same feedback approach as described above.

The purpose of the DASH MPD is to give time (and location) information to the client device 100 to playback the media segments with regard to a particular content. The MPD syntax may be defined in XML. The MPD may also be updated from time to time (e.g., in minimum time intervals).

As shown in Fig. 9, an MPD file may comprise three major components, namely periods 902, representations 904 and media segments 906. As depicted in Fig. 9, the periods 902 are the outermost part of the MPD 900. Periods 902 are typically larger pieces of media that are played out sequentially by the server device 200. Inside a period 902, multiple different encodings of the content may occur. Each alternative encoding is called a representation 904. These representations 904 can have, for example, different bitrates, frame rates or video resolutions. Finally, each representation 904 describes a series of media segments 906 identified by HTTP URLs. The URLs are either explicitly described in the representation 904 (similar to a playlist) or described through a template construction, which allows the client device 100 to derive a valid URL for each media segment 906 of a representation 904. The MPD format is flexible and can support other media container formats such as MPEG-2 TS. Content play-list or ad-insertion functionality can easily be achieved by chaining periods 902 of different content together.

The media segment URLs may be described in a template form or in a playlist form. In a template form the segment is constructed by replacing a certain part of the template by the index i. As an example: "http://ex.com/path/media-segment-%d.3gs", i in the well known printf format results in the URL "http://ex.com/path/media-segment-10.3gs", when i==10 and "http://ex.com/path/media-segment-11.3gs", when i==11.

In case of DASH, the printf "%d" is described as "$Index$". When the URLs are in a playlist form, the client device 100 can regard the list of URLs as an array and $i$ as the index of the array (starting at value one).

As mentioned above, DASH operates by segmenting the continuous media stream into a sequence of media segments 906. The media segments 906 may be distributed independently from each other as individual files over the communication network 102 from the server device 200 to the client device 100. The client device 100 sorts the sequence of received files and concatenates the files back into a continuous media stream.

In case of broadcast adaptive HTTP live streaming, the following steps are executed at the client device 100 in order to provide a continuous streaming service:

1. The client 100 device parses the initial MPD which indicates a media presentation of live type.

2. The client device 100 selects one (or more) desired representations

3. The client device 100 receives media segments corresponding to the current local time.

4. The client device 100 buffers the media segments at least for a minimum amount of time before starting the rendering. The client device 100 may choose between representations to adapt the bitrate, etc.

5. Content is rendered on a man-machine interface of the client device 100 and difference information is continuously sent back to the server device 200 as described above.

The above scheme may also apply for DASH over broadcast, except that the client devices 100 do not choose between representations to individually adapt the bitrate, and so on. Instead, the clients devices 100 stay on the same quality in case of broadcast reception.

One key issue for live streaming is to find the current "live point" (i.e., $t = t_{now}$). In case of traditional live streaming, the time "NOW" is associated with the reception of the first bits (i.e., the first bits of the first media segment). The client device 100 connects to the media stream and the server device 200 starts pushing data from "NOW" onwards.

In case of live DASH, the client device 100 needs to fetch the sorted list of media segments starting from the NOW time. Since the server device 200 "just" makes the segments available, the client device 100 needs to work-out the live point "NOW" by itself. Contrary to other live HTTP streaming solutions, in DASH, the client device is not required to fetch the MPD updates for live streams.

The client device 100 may read the start time of the live DASH media segment stream from the MPD. The value of the MPD element *availabilityStartTime* gives the earliest availability time of the first media segment of a first media stream or of a first part of the first media stream (live stream). The availability time of subsequent media segments can be calculated based on the earliest availability time of this first media segment assuming that the media segment duration is constant, e.g. 10 seconds. The earliest availability time of this first media segment can also be used to synchronize the DASH segment stream with the wall clock time as follows:

If the client device 100 is properly time synchronized, it can calculate the latest available media segment on the server device 200 if the (average) segment duration ($d_{ms}$) of the media segments is known. Let to be the value of *availabilityStartTime* minus segment duration of the first media segment, and let $t_{now}$ be the current time, then the index i >= *1* of the latest available media segment on the server device 200 is calculated as

$$i = floor\left(\frac{t_{now} - t_0}{d_{ms}}\right)$$

with $d_{ms}$ being equal to the media segment duration (constant for all media segments). In other words, the client device 100 calculates the number of segments with segment duration $d_{ms}$ between now ($t_{now}$) and the start of the stream ($t_0$). The start of the media stream is described as *availabilityStartTime.*

When transmitting a DASH media stream from the server device 200 to the client device 100 using MBMS (Multimedia Broadcast Multicast Service), the media segments are not actively downloaded (i.e., requested) by the client device 100 from the server device 200 via a unicast communication link using, for example, HTTP. Instead, the media segments are delivered over a broadcast communication link using FLUTE or another file-based delivery protocol.

FLUTE is a protocol which allows delivery of files over broadcast links using the User Datagram Protocol (UDP) as transport protocol. FLUTE partitions the media segment file into a sequence of UDP packets and transmits a corresponding stream of UDP packets from the server device 200 to the client device 100. Each UDP packet is uniquely marked with a sequence number (called FEC Payload ID), so that the client device 100 can re-assemble the media segment file from the received UDP packets. FLUTE is designed to provide additional information for each media segment file. Beside the file name, also the MIME-Type, Content-Location and many other HTTP headers are provided by FLUTE.

However, UDP is an unreliable protocol (e.g., there are no retransmissions like when using TCP). Thus, FLUTE offers to increase the reliability of transmitting the stream of UDP packets by using Application Layer Forward Error Correction (AL-FEC) codes.

That is, the server device 200 adds FEC redundancy to the stream of UDP packets (overhead information), so that the client device 100 may recover the file, even if some UDP packets were lost during transmission from the server device 200 to the client device 100. This communication mechanism (delivery of DASH segments over broadcast) is depicted in Fig. 10. As can be derived from Fig. 10, each media segment 906 is carried as independent FLUTE object with its own portion of FEC redundancy 1000.

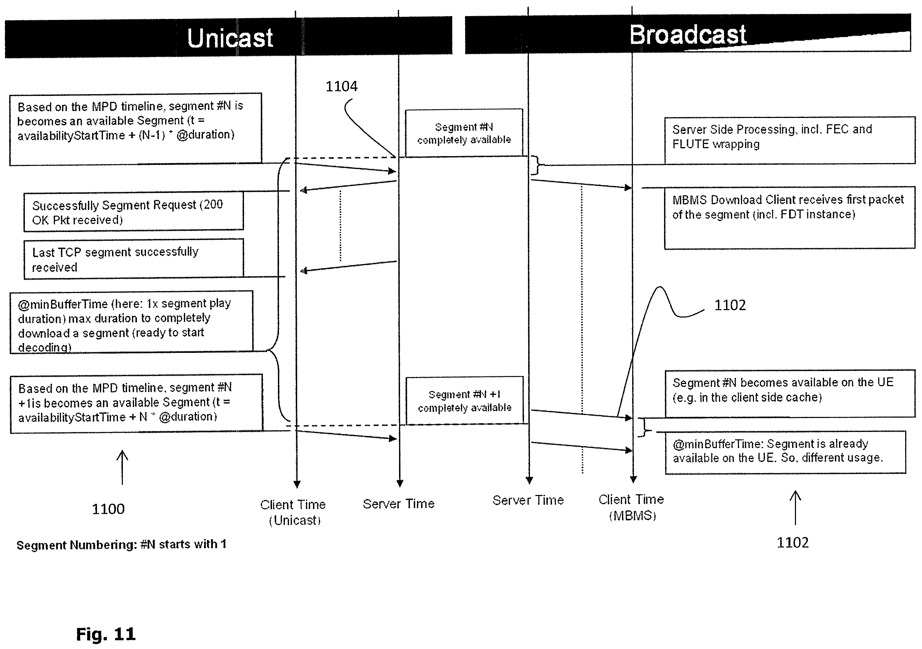

Fig. 11 shows a comparison of media segment availability for unicast communication and broadcast communication. "Availability of a media segment" as used herein may have a plurality of meanings. Generally, it may mean that an encoder (e.g., a live encoder 608 on the server side) which generates the media stream has completed the construction of a media segment and has released it for distribution. In the context of DASH, "availability of a media segment" may mean that a media segment of a given index N is made available for distribution by the server device 200. When using DASH over broadcast, there is the challenge that the FLUTE layer does not indicate to the client device 100 which media segment is currently received at the client device 100 from the server device 200. Instead, the FLUTE layer makes the media segment available to the client device 100 (i.e., indicates the reception at the client device 100) only after it has been completely received. That is, "availability of a media segment" means in the context of broadcast delivery that a media segment of a given index N is made available for rendering at the client device 100.

Fig. 11 shows that, in the case of unicast communication 1100, "Availability of a media segment" refers to time instance 1104 at which a media segment (#N) is released at the server device 200 for distribution (e.g., download); this time instance coincides with the corresponding availability entry in the MPD file. In contrast, in the case of broadcast communication 1102, "Availability of a media segment" refers to time instance 1106 at which the media segment (#N) is made available for rendering at the client device 200. Ideally, this time instance coincides with the corresponding predicted availability entry in the MPD file. As can be derived from Fig. 11, there is a request from the client device 200 to the server device to download the media segment (#N) in the case of unicast communication 1100, wherein in the case of broadcast communication 1102 there is no such request Broadcast delivery is started automatically.

Since the availability of a media segment at the client device 100 is a predicted availability (due to the varying delivery delay of the media segments), the predicted availability entries in the MPD file include an offset which is added to the availability value indicating the availability for download from or broadcast by the server device 200. If the offset is set too short, the client device 100 will start rendering the video content too early and will suffer a buffer underrun, which manifests itself as a video freeze. On the other hand, if the offset is set too long, a large delay is created between the live event and the rendering of the live event at the client device 100.

In order to avoid this problem, functionality of the client device 100 like MBMS QoE software (which, e.g., runs on MBMS-compliant client devices 100) may be used to track the client device buffering of DASH media segments, and to minimize the end-to-end delay for different live encoders and segment sizes. "Client device buffering" means in this context in particular the duration between the media segment availability in the local file system of the client device 100 and the consumption of the media segment by the DASH player subunit 602 of the client device 100. The DASH player subunit 602 reads the media segment according to the predicted availability described by the MPD file. The DASH player may not adjust (speed up) its reading process when the media segment is available earlier than at predicted availability. But the DASH player subunit 602 may stale (freeze) rendering when a media segment is not available at the described predicted availability of the MPD file.

The QoE subunit 604 needs to be DASH aware to process the MPD file and also FLUTE reception aware to find the corresponding segments on the FLUTE layer (the FLUTE layer is generic for many different applications, while DASH is a specific application).

The QoE subunit 604 may calculate the DASH segment availability based on the wall clock time, and the DASH player subunit 602 may consume the media segments according to the wall clock time. At the time instance of predicted availability for the next media segment (according to MPD), the DASH player subunit 602 requests the next media segment from its local file system (or memory) in the buffer 606. The DASH player subunit 602 is generally not aware of the reception of the media segment.

The QoE subunit 604 may be a new QoE module or an extended existing QoE module which is capable of processing the DASH MPD which describes the media segment URLs and also the predicted availabilities for the media segments. The QoE module may monitor the FLUTE layer for reception of new media segments. Each media segment is uniquely identified by a segment URL (content location). The difference between the predicted availability on the file system of the client device according to the MDP and the actual availability is fed back via BMSC for offset adjustment. A new MPD is fetched from the server device 200 when the current playback time gets close to the end of the part of the media stream described in the MPD, or reaches a time that is longer than the minimal update time described in the MPD.

In the foregoing, principles, embodiments and various modes of implementing the technique disclosed herein have exemplarily been described. The present invention should not be construed as being limited to the particular principles, embodiments and modes discussed herein. Rather, it will be appreciated that various changes and modifications may be made by a person skilled in the art without departing from the scope of the present invention as defined in the claims that follow.

**Claims**

1. A method of operating a client device (100) that is adapted to receive from a server device (200) via a broadcast communication network (102) at least one media stream comprising individual media segments (906), the method comprising:

    - receiving first availability information, the first availability information indicating a predicted availability time of one or more media segments (906) of a first media stream or a first part of the first media stream at the client device (100), wherein the predicted availability time of a media segment (906) is a prediction indicative of when the media segment (906) is available at the client device (100) or for download by the client device (100);
    - determining, based on the first availability information and for at least one media segment of the first media stream or the first part of the first media stream received at the client device (100), a time difference between the predicted availability time and an actual availability time at the client device (100); and
    - transmitting difference information reflecting the determined time difference for the at least one media segment to the server device (200).

2. The method according to claim 1, wherein the first availability information is received from the server device (200); or wherein the first availability information is locally calculated by the client device (100).

3. The method according to claim 2, further comprising receiving second availability information from the server device (200) which indicates a predicted availability time of media segments of a second media stream or a second part of the first media stream at the client device (100) and which reflects the transmitted difference information.

4. The method according to any one of claims 1 to 3, wherein one or more received media segments are buffered in a buffer (606) at the client device (100), and wherein the difference information reflects at least one buffering period indicating how long a media segment (906) completely received at the client device (100) has been stored in the buffer (606) until the received media segment (906) has been read out of the buffer in (606) in order to be rendered.

5. The method according to any one of claims 1 to 4, wherein the determination of the time difference is carried out using a Quality Of Experience, QoE, functionality (604).

6. The method according to any one of claims 1 to 5, wherein the client device (100) comprises a media player (602) configured to read each media segment (906) in accordance with its predicted availability time.

7.  A method of operating a server device (200) that is adapted to transmit via a broadcast communication network (102) to a client device (100) at least one media stream comprising individual media segments (906), the method comprising:

    - transmitting first availability information to the client device (100), the first availability information indicating a predicted availability time of one or more media segments (906) of a first media stream or a first part of a first media stream at the client device (100) which are transferred to the client device (100) in the future;
    - receiving difference information from the client device (100) reflecting, for at least one media segment (906) of the first media stream or the first part of the first media stream received at the client device (100), a time difference between the predicted availability time based on the first availability information and an actual availability time at the client device (100);
    - generating, based on the received difference information, second availability information indicating a predicted availability time of one or more media segments (906) of a second media stream or a second part of the first media stream at the client device (100) which are transferred to the client device (100) in the future, wherein the predicted availability time of a media segment (906) is a prediction indicative of when the media segment (906) is available at the client device (100) or for download by the client device (100); and
    - transmitting the second availability information to the client device (100).

8.  The method according to claim 7, wherein the server device (200) adapts, based on the received difference information, a time offset reflected in the predicted availability time of the one or more media segments (906) of the second media stream or the second part of the first media stream.

9.  The method according to any one of claims 1 to 8, wherein the predicted availability time of a media segment (906) is a prediction indicative of when the media segment (906) is fully available at the client device (100) or fully available for download by the client device (100).

10. The method according to any one of claims 1 to 9, wherein the actual availability time of a media segment (906) is indicative of when a delivery protocol used to deliver the media segment (906) to the client device (100) has fully received the media segment (906) at the client device (100).

11. A computer program product comprising program code portions for performing the steps of any one of the preceding claims when the computer program product is executed on one or more computing devices.

12. A client device (100) that is adapted to receive a broadcast communication network (102) from a server device (200) at least one media stream comprising individual media segments (906), the client device (100) comprising:

    - a receiving unit (104) adapted to receive first availability information, the first availability information indicating a predicted availability time of one or more media segments (906) of a first media stream or a first part of a first media stream at the client device (100), wherein the predicted availability time of a media segment (906) is a prediction indicative of when the media segment (906) is available at the client device (100) or for download by the client device (100);
    - a processing unit (106) connected to the receiving unit (104) and adapted to determine, based on the received first availability information and for at least one media segment (906) of the first media stream or the first part of the first media stream received at the client device (100), a time difference between the predicted availability time and an actual availability at the client device (100), and to generate difference information reflecting the determined time difference to the server device (200); and
    - a transmitting unit (108) connected to the processing unit (106) and adapted to transmit the difference information to the server device (200).

13. The client device of claim 12, wherein the client device is further adapted to perform the method of any of the claims 2 to 6 and 9 and 10.

14. A server device (200) that is adapted to transmit via a broadcast communication network (102) to a client device (100) at least one media stream comprising individual media segments (906), the server device (200) comprising:

    - a transmitting unit (202) adapted to transmit first availability information to the client device (100), the first availability information indicating a predicted availability time of one or more media segments (906) of a first media stream or a first part of the first media stream at the client device (100) which are transferred to the client device (100) in the future, wherein the predicted availability time of a media segment (906) is a prediction indicative of when the media segment (906) is available at the client device (100) or for download by the client device (100);

- a receiving unit (204) adapted to receive difference information from the client device (100) which reflects, for at least one media segment (906) of the first media stream of the first part of the first media stream received at the client device (100), a time difference between the predicted availability time based on the first availability information and an actual availability time at the client device (100); and

- a generating unit (206) connected to the transmitting unit (202) and the receiving unit (204) and adapted to generate, based on the received difference information, second availability information which indicates a predicted availability time of media segments (906) of a second media stream or a second part of the first media stream at the client device (100) which are transferred to the client device (100) in the future;

wherein the transmitting unit (202) is further adapted to transmit the second availability information to the client device (100).

15. The server device of claim 14, wherein the server device is further adapted to perform the method of any of the claims 8 to 10.

## Patentansprüche

1. Verfahren zum Betreiben einer Client-Vorrichtung (100), die zum Empfangen mindestens eines Medienstroms mit einzelnen Mediensegmenten (906) über ein Broadcast-Kommunikationsnetzwerk (102) von einer Server-Vorrichtung (200) ausgelegt ist, wobei das Verfahren umfasst:

- Empfangen erster Verfügbarkeitsinformationen, wobei die ersten Verfügbarkeitsinformationen eine vorhergesagte Verfügbarkeitszeit eines oder mehrerer Mediensegmente (906) eines ersten Medienstroms oder eines ersten Teils des ersten Medienstroms an der Client-Vorrichtung (100) angeben, wobei die vorhergesagte Verfügbarkeitszeit eines Mediensegments (906) eine Vorhersage ist, die angibt, wann das Mediensegment (906) an der Client-Vorrichtung (100) oder zum Download durch die Client-Vorrichtung (100) verfügbar ist;

- Bestimmen basierend auf den ersten Verfügbarkeitsinformationen und für mindestens ein Mediensegment des ersten Medienstroms oder des ersten Teils des ersten Medienstroms, das an der Client-Vorrichtung (100) empfangen wird, einer Zeitdifferenz zwischen der vorhergesagten Verfügbarkeitszeit und einer tatsächlichen Verfügbarkeitszeit an der Client-Vorrichtung (100); und

- Senden von Differenzinformationen, welche die bestimmte Zeitdifferenz für das mindestens eine Mediensegment widerspiegeln, an die Server-Vorrichtung (200).

2. Verfahren nach Anspruch 1,
wobei die ersten Verfügbarkeitsinformationen von der Server-Vorrichtung (200) empfangen werden; oder
wobei die ersten Verfügbarkeitsinformationen lokal von der Client-Vorrichtung (100) berechnet werden.

3. Verfahren nach Anspruch 2,
ferner umfassend ein Empfangen zweiter Verfügbarkeitsinformationen von der Server-Vorrichtung (200), welche eine vorhergesagte Verfügbarkeitszeit von Mediensegmenten eines zweiten Medienstroms oder eines zweiten Teils des ersten Medienstroms an der Client-Vorrichtung (100) angeben und welche die gesendeten Differenzinformationen widerspiegeln.

4. Verfahren nach einem der Ansprüche 1 bis 3,
wobei ein oder mehrere empfangene Mediensegmente in einem Puffer (606) an der Client-Vorrichtung (100) gepuffert werden, und wobei die Differenzinformationen mindestens eine Pufferperiode widerspiegeln, die angibt, wie lange ein Mediensegment (906), das an der Client-Vorrichtung (100) vollständig empfangen wird, im Puffer (606) gespeichert wurde, bis das empfangene Mediensegment (906) aus dem Puffer (606) ausgelesen wurde, um wiedergegeben zu werden.

5. Verfahren nach einem der Ansprüche 1 bis 4,
wobei die Bestimmung der Zeitdifferenz unter Verwendung einer Erlebnisqualitäts, QoE,-Funktionalität (604) ausgeführt wird.

6. Verfahren nach einem der Ansprüche 1 bis 5,
wobei die Client-Vorrichtung (100) einen Media-Player (602) umfasst, der zum Lesen jedes Mediensegments (906) gemäß seiner vorhergesagten Verfügbarkeitszeit konfiguriert ist.

7. Verfahren zum Betreiben einer Server-Vorrichtung (200), die zum Senden mindestens eines Medienstroms mit einzelnen Mediensegmenten (906) über ein Broadcast-Kommunikationsnetzwerk (102) an eine Client-Vorrichtung (100) ausgelegt ist, wobei das Verfahren umfasst:

- Senden erster Verfügbarkeitsinformationen an die Client-Vorrichtung (100), wobei die ersten Verfügbarkeitsinformationen eine vorhergesagte Verfügbarkeitszeit eines oder mehrerer Mediensegmente (906) eines ersten Medienstroms oder eines ersten Teils eines ersten Medienstroms an der Client-Vorrichtung (100) angeben, die in Zukunft an die Client-Vorrichtung (100) übertragen werden;

- Empfangen von Differenzinformationen von der Client-Vorrichtung (100), die für mindestens ein Mediensegment (906) des ersten Medienstroms oder des ersten Teils des ersten Medienstroms, der an der Client-Vorrichtung (100) empfangen wird, eine Zeitdifferenz zwischen der vorhergesagten Verfügbarkeitszeit basierend auf den ersten Verfügbarkeitsinformationen und einer tatsächlichen Verfügbarkeitszeit an der Client-Vorrichtung (100) widerspiegeln; und

- Erzeugen zweiter Verfügbarkeitsinformationen, die eine vorhergesagte Verfügbarkeitszeit eines oder mehrerer Mediensegmente (906) eines zweiten Medienstroms oder eines zweiten Teils des ersten Medienstroms an der Client-Vorrichtung (100) angeben, die in Zukunft an die Client-Vorrichtung (100) übertragen werden, basierend auf den empfangenen Differenzinformationen, wobei die vorhergesagte Verfügbarkeitszeit eines Mediensegments (906) eine Vorhersage ist, die angibt, wann das Mediensegment (906) an der Client-Vorrichtung (100) oder zum Download durch die Client-Vorrichtung (100) verfügbar ist; und

- Senden der zweiten Verfügbarkeitsinformationen an die Client-Vorrichtung (100).

8. Verfahren nach Anspruch 7, wobei die Server-Vorrichtung (200) einen Zeitoffset, der in der vorhergesagten Verfügbarkeitszeit des einen oder der mehreren Mediensegmente (906) des zweiten Medienstroms oder des zweiten Teils des ersten Medienstroms widergespiegelt wird, basierend auf den empfangenen Differenzinformationen anpasst.

9. Verfahren nach einem der Ansprüche 1 bis 8, wobei die vorhergesagte Verfügbarkeitszeit eines Mediensegments (906) eine Vorhersage ist, die angibt, wann das Mediensegment (906) an der Client-Vorrichtung (100) vollständig verfügbar oder zum Download durch die Client-Vorrichtung (100) vollständig verfügbar ist.

10. Verfahren nach einem der Ansprüche 1 bis 9, wobei die tatsächliche Verfügbarkeitszeit eines Mediensegments (906) angibt, wann ein Zustellungsprotokoll, das zum Zustellen des Mediensegments (906) an die Client-Vorrichtung (100) verwendet wird, das Mediensegment (906) an der Client-Vorrichtung (100) vollständig empfangen hat.

11. Computerprogrammprodukt, umfassend Programmcodeabschnitte zum Ausführen der Schritte nach einem der vorhergehenden Ansprüche, wenn das Computerprogrammprodukt auf einer oder mehreren Computervorrichtungen ausgeführt wird.

12. Client-Vorrichtung (100), die zum Empfangen mindestens eines Medienstroms mit einzelnen Mediensegmenten (906) über ein Broadcast-Kommunikationsnetzwerk (102) von einer Server-Vorrichtung (200) ausgelegt ist, wobei die Client-Vorrichtung (100) umfasst:

- eine erste Empfangseinheit (104), die zum Empfangen erster Verfügbarkeitsinformationen ausgelegt ist, wobei die ersten Verfügbarkeitsinformationen eine vorhergesagte Verfügbarkeitszeit eines oder mehrerer Mediensegmente (906) eines ersten Medienstroms oder eines ersten Teils eines ersten Medienstroms an der Client-Vorrichtung (100) angeben, wobei die vorhergesagte Verfügbarkeitszeit eines Mediensegments (906) eine Vorhersage ist, die angibt, wann das Mediensegment (906) an der Client-Vorrichtung (100) oder zum Download durch die Client-Vorrichtung (100) verfügbar ist;
- eine Verarbeitungseinheit (106), die mit der Empfangseinheit (104) verbunden und so ausgelegt ist, dass sie basierend auf den empfangenen ersten Verfügbarkeitsinformationen und für mindestens ein Mediensegment (906) des ersten Medienstroms oder des ersten Teils des ersten Medienstroms, das an der Client-Vorrichtung (100) empfangen wird, eine Zeitdifferenz zwischen der vorhergesagten Verfügbarkeitszeit und einer tatsächlichen Verfügbarkeitszeit an der Client-Vorrichtung (100) bestimmt und Differenzinformationen, welche die bestimmte Zeitdifferenz widerspiegeln, für die Server-Vorrichtung (200) erzeugt; und
- eine Sendeeinheit (108) die mit der Verarbeitungseinheit (106) verbunden und zum Senden der Differenzinformationen an die Server-Vorrichtung (200) ausgelegt ist.

13. Client-Vorrichtung nach Anspruch 12, wobei die Client-Vorrichtung ferner so ausgelegt ist, dass sie das Verfahren nach einem der Ansprüche 2 bis 6 sowie 9 und 10 durchführt.

14. Server-Vorrichtung (200), die zum Senden mindestens eines Medienstroms mit einzelnen Mediensegmenten (906) über ein Broadcast-Kommunikationsnetzwerk (102) an eine Client-Vorrichtung (100) ausgelegt ist, wobei die Server-Vorrichtung (200) umfasst:

- eine Sendeeinheit (202), die zum Senden erster Verfügbarkeitsinformationen an die Client-Vorrichtung (100) ausgelegt ist, wobei die ersten Verfügbarkeitsinformationen eine vorhergesagte Verfügbarkeitszeit eines oder mehrerer Mediensegmente (906) eines ersten Medienstroms oder eines ersten Teils des ersten Medienstroms an der Client-Vorrichtung (100) angeben, die in Zukunft an die Client-Vorrichtung (100) übertragen werden, wobei die vorhergesagte Verfügbarkeitszeit eines Mediensegments (906) eine Vorhersage ist, die angibt, wann das Mediensegment (906) an der Client-Vorrichtung (100) oder zum Download durch die Client-Vorrichtung (100) verfügbar ist;

- eine Empfangseinheit (204), die zum Empfangen von Differenzinformationen von der Client-Vorrichtung (100) ausgelegt ist, die für mindestens ein Mediensegment (906) des ersten Medienstroms oder des ersten Teils des ersten Medienstroms, das an der Client-Vorrichtung (100) empfangen wird, eine Zeitdifferenz zwischen der vorhergesagten Verfügbarkeitszeit basierend auf den ersten Verfügbarkeitsinformationen und einer tatsächlichen Verfügbarkeitszeit an der Client-Vorrichtung (100) widerspiegeln; und

- eine Erzeugungseinheit (206), die mit der Sendeeinheit (202) und der Empfangseinheit (204) verbunden und so ausgelegt ist, dass sie basierend auf den empfangenen Differenzinformationen zweite Verfügbarkeitsinformationen erzeugt, die eine vorhergesagte Verfügbarkeitszeit von Mediensegmenten (906) eines zweiten Medienstroms oder eines zweiten Teils des ersten Medienstroms an der Client-Vorrichtung (100) angeben, die in Zukunft an die Client-Vorrichtung (100) übertragen werden;

wobei die Sendeeinheit (202) ferner zum Senden der zweiten Verfügbarkeitsinformationen an die Client-Vorrichtung (100) ausgelegt ist.

15. Server-Vorrichtung nach Anspruch 14, wobei die Server-Vorrichtung ferner so ausgelegt ist, dass sie das Verfahren nach einem der Ansprüche 8 bis 10 durchführt.

**Revendications**

1. Procédé de fonctionnement d'un dispositif client (100) qui est adapté pour recevoir depuis un dispositif de serveur (200) via un réseau de communication par diffusion (102) au moins un flux média comprenant des segments médias individuels (906), le procédé comprenant de :

- recevoir une première information de disponibilité, la première information de disponibilité indiquant une heure de disponibilité prédite d'un ou plusieurs segments médias (906) d'un premier flux média ou une première partie du premier média au niveau du dispositif client (100), dans lequel l'heure de disponibilité prédite d'un segment média (906) est une prédiction indiquant quand le segment média (906) est disponible au niveau du dispositif client (100) ou en vue d'un téléchargement par le dispositif client (100) ;

- déterminer, sur la base de la première information de disponibilité et pour au moins un segment média du premier flux média ou de la première partie du premier flux média reçu au niveau du dispositif client (100), une différence d'heure entre l'heure de disponibilité prédite et une heure de disponibilité effective au niveau du dispositif client (100) ; et

- transmettre l'information de différence reflétant la différence d'heure déterminée pour au moins un segment média au dispositif de serveur (200).

2. Procédé selon la revendication 1, dans lequel la première information de disponibilité est reçue depuis le dispositif de serveur (200) ; et dans lequel la première information de disponibilité est calculée localement par le dispositif client (100).

3. Procédé selon la revendication 2, comprenant en outre de recevoir une seconde information de disponibilité provenant du dispositif de serveur (200) qui indique une heure de disponibilité prédite des segments médias d'un second flux média ou d'une seconde partie du premier flux média au niveau du dispositif client (100) et qui reflète l'information de différence transmise.

4. Procédé selon une quelconque des revendications 1 à 3, dans lequel un ou plusieurs segments médias reçus sont mis en mémoire tampon dans une mémoire tampon (606) au niveau du dispositif client (100) et dans lequel l'information de différence reflète au moins une période de mise en mémoire tampon indiquant pendant combien de temps un segment média (906) complètement reçu au niveau du dispositif client (100) a été mémorisé dans la mémoire tampon (606) jusqu'à ce que le segment média reçu (906) ait été lu dans la mémoire tampon (606) afin d'être restitué.

5. Procédé selon une quelconque des revendications 1 à 4, dans lequel la détermination de la différence d'heure est effectuée en utilisant une fonctionnalité de qualité d'expérience, QoE (604).

**6.** Procédé selon une quelconque des revendications 1 à 5,
dans lequel le dispositif client (100) comprend un lecteur média (602) configuré pour lire chaque segment média (906) conformément à son heure de disponibilité prédite.

**7.** Procédé de fonctionnement d'un dispositif de serveur (200) qui est adapté pour émettre via un réseau de communication par diffusion (102) vers un dispositif client (100) au moins un flux média comprenant des segments médias individuels (906), le procédé comprenant de :

- transmettre une première information de disponibilité au dispositif client (100), la première information de disponibilité indiquant une heure de disponibilité prédite d'un ou plusieurs segments médias (906) d'un premier média ou une première partie d'un premier média au niveau du dispositif client (100) qui sont transférés au dispositif client (100) dans le futur ;
- recevoir une information de différence provenant du dispositif client (100) reflétant, pour au moins un segment média (906) du premier flux média ou la première partie du premier flux média reçu au niveau du dispositif client (100), une différence d'heures entre le l'heure de disponibilité prédite sur la base de la première information de disponibilité et une heure de disponibilité effective au niveau du dispositif client (100) ;
- générer, sur la base de l'information de distance reçue, une seconde information de disponibilité indiquant une heure de disponibilité prédite d'un ou plusieurs segments médias (906) d'un second média ou une seconde partie du premier média au niveau du dispositif client (100) qui sont transférés au dispositif client (100) dans le futur, dans lequel l'heure de disponibilité prédite d'un segment média (906) est une prédiction indiquant quand le segment média (906) est disponible au niveau du dispositif client (100) ou en vue d'un téléchargement par le dispositif client (100) ;
- transmettre la seconde information de disponibilité au dispositif client (100).

**8.** Procédé selon la revendication 7,
dans lequel le dispositif de serveur (200) adapte, sur la base de l'information de différence reçue, un décalage temporel reflété dans l'heure de disponibilité prédite du ou des segments médias (906) du second flux média ou de la seconde partie du premier flux média.

**9.** Procédé selon une quelconque des revendications 1 à 8,
dans lequel l'heure de disponibilité prédite d'un segment média (906) est une prédiction indiquant quand le segment média (906) est totalement disponible au niveau du dispositif client (100) ou totalement disponible en vue d'un téléchargement par le dispositif client (100).

**10.** Procédé selon une quelconque des revendications 1 à 9,
dans lequel l'heure de disponibilité effective d'un segment média (906) indique quand un protocole de remise utilisé pour remettre le segment média (906) au dispositif client (100) a totalement reçu le segment média (906) au niveau du dispositif client (100).

**11.** Produit de programme informatique comprenant des portions de code de programme pour mettre en oeuvre les étapes d'une quelconque des revendications précédentes lorsque le produit de programme informatique est exécuté sur un ou plusieurs dispositifs informatiques.

**12.** Dispositif client (100) qui est adapté pour recevoir via un réseau de communication par diffusion (102) depuis un dispositif de serveur (200) au moins un flux média comprenant des segments médias individuels (906), le dispositif client (100) comprenant :

- une unité de réception (104) adaptée pour recevoir une première information de disponibilité, la première information de disponibilité indiquant une heure de disponibilité prédite d'un ou plusieurs segments médias (906) d'un premier flux média ou une première partie du premier média au niveau du dispositif client (100), dans lequel l'heure de disponibilité prédite d'un segment média (906) est une prédiction indiquant quand le segment média (906) est disponible au niveau du dispositif client (100) ou en vue d'un téléchargement par le dispositif client (100) ;
- une unité de traitement (106) connectée à l'unité de réception (104) et adaptée pour déterminer, sur la base de la première information de disponibilité et pour au moins un segment média (906) du premier flux média ou de la première partie du premier flux média reçu au niveau du dispositif client (100), une différence d'heure entre l'heure de disponibilité prédite et une heure de disponibilité effective au niveau du dispositif client (100) et générer une information de différence reflétant la différence d'heure déterminée vers le dispositif de serveur (200) ; et
- une unité de transmission (108) connectée à l'unité de traitement (106) et adaptée pour transmettre l'information de différence au dispositif de serveur (200).

**13.** Dispositif client selon la revendication 12, dans lequel le dispositif client est en outre adapté pour mettre en oeuvre le procédé selon une quelconque des revendications 2 à 6 et 9 et 10.

14. Dispositif de serveur (200) qui est adapté pour transmettre via un réseau de communication par diffusion (102) à un dispositif client (100) au moins un flux média comprenant des segments média individuels (906), le dispositif de serveur (200) comprenant :

   - une unité de transmission (202) adaptée pour transmettre une première information de disponibilité au dispositif client (100), la première information de disponibilité indiquant une heure de disponibilité prédite d'un ou plusieurs segments médias (906) d'un premier média ou une première partie d'un premier média au niveau du dispositif client (100) qui sont transférés au dispositif client (100) dans le futur, dans lequel l'heure de disponibilité prédite d'un segment média (906) est une prédiction indiquant quand le segment média (906) est disponible au niveau du dispositif client (100) ou en vue d'un téléchargement par le dispositif client (100) ;
   - une unité de réception (204) adaptée pour recevoir une information de différence provenant du dispositif client (100) qui reflète, pour au moins un segment média (906) du premier flux média ou la première partie du premier flux média reçu au niveau du dispositif client (100), une différence d'heure entre l'heure de disponibilité prédite sur la base de la première information de disponibilité et une heure de disponibilité effective au niveau du dispositif client (100) ;et
   - une unité de génération (206) connectée à l'unité de transmission (202) et l'unité de réception (204) et adaptée pour générer, sur la base de l'information de distance reçue, une seconde information de disponibilité qui indique une heure de disponibilité prédite de segments médias (906) d'un second flux média ou d'une seconde partie du premier flux média au niveau du dispositif client (100) qui sont transférés au dispositif client (100) dans le futur ;

   dans lequel l'unité de transmission (202) est en outre adaptée pour transmettre la seconde information de disponibilité au dispositif client (100).

15. Dispositif de serveur selon la revendication 14 dans lequel le dispositif de serveur est en outre adapté pour mettre en oeuvre le procédé selon une quelconque des revendications 8 à 10.

Fig. 2

Fig. 1

# Fig. 3

S3-1

> Receive first time information from the server device, the first time information indicating a predicted availability of one or more media segments of a first part of the media stream at the client device

S3-2

> Determine, based on the received first time information and for at least one media segment of the first part of the media stream received at the client device, a difference between the predicted availability and an actual availability at the client device

S3-3

> Transmit control information reflecting the determined difference to the server device

# Fig. 4

S4-1

> Transmit first time information to the client device, the first time information indicating a predicted availability of one or more media segments of a first part of the media stream at the client device which are transferred to the client device in the future

S4-2

> Receive control information from the client device reflecting, for at least one media segment of the first part of the media stream received at the client device, a difference between the predicted availability based on the first time information and an actual availability at the client device

S4-3

> Generate, based on the received control information, second time information indicating a predicted availability of one or more media segments of a second part of the media stream at the client device which are transferred to the client device in the future

S4-4

> Transmit the second time information to the client device

**Fig. 5**

**Fig. 6**

EP 2 944 089 B1

**MPD Timeline**     **File System Timeline**

706

$t = t_{flute,\,X}$    Seg X received and in File System

702

Seg X is available    $t = t_{mpd,\,X}$

710

SegSize[bit]/GBR[bps]

SegSize[bit]/GBR[bps]

@dur [s]

702

Seg X +1 is available    $t = t_{mpd,\,X+1}$

$t = t_{flute,\,X+1}$    Seg X +1 received

706

702

Seg X +2 is available    $t = t_{mpd,\,X+2}$

$t = t_{flute,\,X+2}$    Seg X +2 received

706    706

702

$t = t_{flute,\,X+3}$    Seg X +3 received

Seg X +3 is available    $t = t_{mpd,\,X+3}$

$d_{buf,\,X+3} = t_{mpd,\,X+3} - t_{flute,\,X+3}$

UE Buffer [s]

708

700

704

t

t

**Fig. 7**

Fig. 8

**Fig. 9**

**Fig. 10**

## Unicast | Broadcast

| | |
|---|---|
| Based on the MPD timeline, segment #N is becomes an available Segment (t = availabilityStartTime + (N-1) * @duration) | Server Side Processing, incl. FEC and FLUTE wrapping |

1104

Segment #N completely available

| | |
|---|---|
| Successfully Segment Request (200 OK Pkt received) | MBMS Download Client receives first packet of the segment (incl. FDT instance) |

Last TCP segment successfully received

@minBufferTime (here: 1x segment play duration) max duration to completely download a segment (ready to start decoding)

1102

| | |
|---|---|
| Based on the MPD timeline, segment #N +1 is becomes an available Segment (t = availabilityStartTime + N * @duration) | Segment #N becomes available on the UE (e.g. in the client side cache) |

Segment #N +1 completely available

@minBufferTime: Segment is already available on the UE. So, different usage.

1100

Client Time (Unicast)    Server Time    Server Time    Client Time (MBMS)

**Segment Numbering: #N starts with 1**

1102

## Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080170630 A1

**Non-patent literature cited in the description**

- **ARAVINDAN RAGHUVEER ; DAVID. H. C.** A Network-Aware Approach for Video and Metadata Streaming. *IEEE TRANSACTIONS ON CIRCUITS AND SYSTEMS FOR VIDEO TECHNOLOGY,* August 2007, vol. 17 (8